**Europäisches Patentamt**

**European Patent Office**

**Office européen des brevets**

(19)

(11) Veröffentlichungsnummer: **0 180 031**
A2

# (12) EUROPÄISCHE PATENTANMELDUNG

(21) Anmeldenummer: **85111892.7**

(22) Anmeldetag: **20.09.85**

(51) Int. Cl.⁴: **F 02 M 41/12,** F 02 M 63/00, F 02 M 59/44

(30) Priorität: **27.10.84 DE 3439497**

(43) Veröffentlichungstag der Anmeldung: **07.05.86**
**Patentblatt 86/19**

(84) Benannte Vertragsstaaten: **DE FR GB**

(71) Anmelder: **ROBERT BOSCH GMBH, Postfach 50, D-7000 Stuttgart 1 (DE)**

(72) Erfinder: **Karle, Anton, Otto-Hahnstrasse 5, D-7250 Leonberg (DE)**
Erfinder: **Laufer, Helmut, Otto-Schöpferstrasse 12, D-7016 Gerlingen (DE)**

(54) **Kraftstoffeinspritzpumpe für Brennkraftmaschinen.**

(57) Es wird eine Kraftstoffeinspritzpumpe für Brennkraft-maschinen angegeben, bei welcher ein Pumpenkolben (17) von einem Nockentrieb (12, 13) in Pumprichtung und von wenigstens einer Schraubendruckfeder (30, 30', 30'') in Saugrichtung angetrieben wird. Um zu verhindern, daß die zulässige Schubspannung in den Enden der Schrauben-druckfeder bei Auftreten von Resonanzschwingungen über-schritten wird, ist die Feder so geformt, daß in ihren Endbe-reichen eine kleinere Schubspannung auftritt als in ihrem mittleren Bereich. Bei einer ersten Ausführungsform der Schraubendruckfeder (30') vergrößert sich der Windungs-durchmesser (D1, D2) von den Endbereichen zur Mitte hin. Bei einer anderen Ausführungsform mit der Schrauben-druckfeder (30'') nimmt der Durchmesser des Federdrahtes von den Endbereichen zur Mitte hin laufend ab.

R. 19697
17.10.1984 Gl/Pi

0180031

ROBERT BOSCH GMBH, 7000 STUTTGART 1

## Kraftstoffeinspritzpumpe für Brennkraftmaschinen

Stand der Technik

Die Erfindung geht aus von einer Kraftstoffeinspritzpumpe für Brennkraftmaschinen nach der Gattung des
Hauptanspruchs. Bei Einspritzpumpen, die neuerdings
hochdrehenden Brennkraftmaschinen mit Direkteinspritzung
zugeordnet sind, bauen sich von der entsprechend hohen
Hubzahl des Pumpenkolbens angeregt in den Rückholfedern
Resonanzschwinungen auf, die die üblicherweise als mit
konstanter Steigung, konstantem Windungsdurchmesser und
konstantem Drahtdurchmesser ausgebildeten Schraubendruckfedern überbelasten. Dabei sind die von den Resonanzschwingungen in der Feder erzeugten dynamischen Schubspannungen besonders hoch an den festen Federenden, wo sich
Spannungsbäuche ausbilden. Eine derartige Überbelastung
der Rückholfedern in bestimmten Betriebszuständen der
Einspritzpumpe schränkt die Dauerhaltbarkeit der Rückholfedern ein.

. . .

Vorteile der Erfindung

Die erfindunsgemäße Kraftstoffeinspritzpumpe mit den kennzeichnenden Merkmalen des Hauptanspruchs hat den Vorteil, daß durch eine den auftretenden dynamischen Schubspannungen angepaßte Geometrie der den Pumpenkolben rückführenden Schraubendruckfeder die Haltbarkeit der Einspritzpumpe bei erhöhten Beanspruchungen gewährleistet ist.

Durch die in den Unteransprüchen aufgeführten Maßnahmen sind vorteilhafte Weiterbildungen der im Hauptanspruch angegebenen Einspritzpumpe möglich. Besonders vorteilhaft ist eine tonnenförmige Ausbildung der Schraubendruckfeder, bei der der Windungsdurchmesser sich von den Enden zur Mitte hin vergrößert, oder bei einer zylindrischen Schraubendruckfeder, bei der sich der Drahtquerschnitt von den Enden zur Mitte hin verkleinert.

Zeichnung

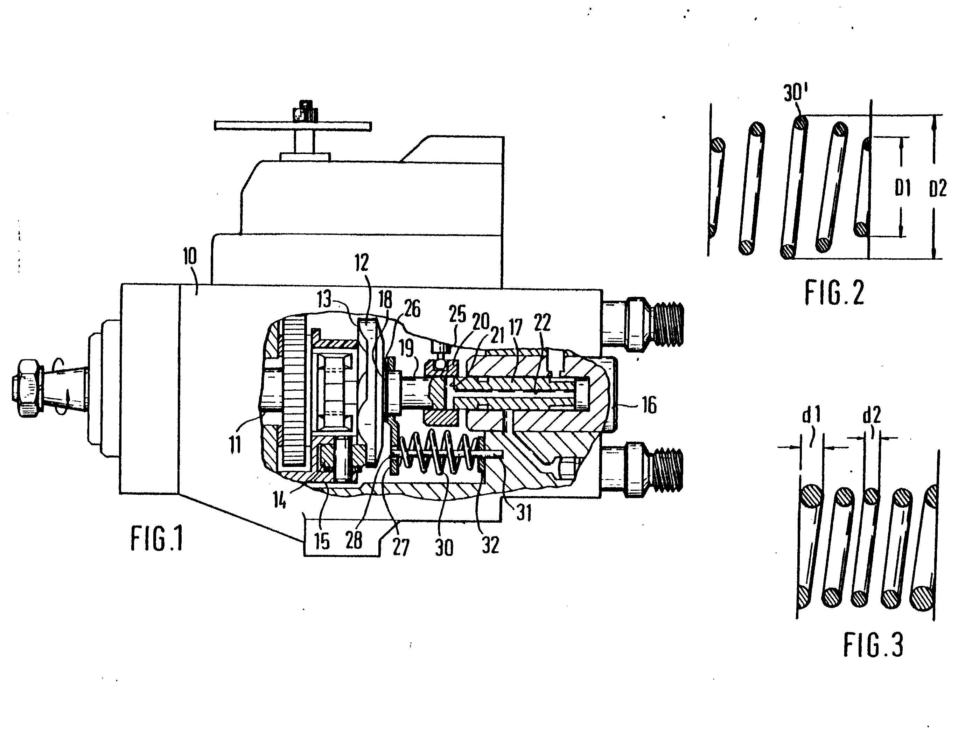

Zwei Ausführungsbeispiele der Erfindung sind in der Zeichnung dargestellt und in der nachfolgenden Beschreibung näher erläutert. Es zeigen Figur 1 eine vereinfachte Seitenansicht einer Kraftstoffeinspritzpumpe teilweise geschnitten, Figur 2 eine vergrößerte Darstellung einer ersten Ausführungsform einer Rückholfeder der Kraftstoffeinspritzpumpe nach Figur 1 im Längsschnitt und Figur 3 eine vergrößerte Darstellung einer zweiten Ausführungsform einer Rückholfeder im Längsschnitt.

Beschreibung der Ausführungsbeispiele

In einem Gehäuse 10 der Kraftstoffeinspritzpumpe ist eine Antriebswelle 11 gelagert. Diese ist mit einer quer

...

zur Achse angeordneten Hubscheibe 12 gekuppelt, die so viele Stirnnocken 13 trägt, wie die Brennkraftmaschine Zylinder hat, der die Einspritzpumpe zugeordnet ist. Die Lauffläche der Hubscheibe 12 liegt auf Rollen 14 auf, die in einem feststehenden Rollenring 15 gehalten sind. Ein in einer Zylinderbüchse 16 gleitender Pumpenkolben 17 hat an seinem antriebsseitigen Ende einen Bund 18, der mit der Hubscheibe 12 drehfest verbunden ist. Zur Steuerung der Kraftstoffeinspritzmenge gleitet ein den Pumpenkolben 17 umgreifender Steuerschieber 20 auf einem antriebsseitigen Pumpenkolbenabschnitt 19, in dem zum Absteuern der Einspritzmenge eine Querbohrung 21 angeordnet ist, die mit einer zur Stirnseite des Pumpenkolbens 17 führenden Längsbohrung 22 verbunden ist. An den Steuerschieber 20 greifen Verstellmittel 25 an, deren Stellung in bekannter Weise von einem Drehzahlregler gesteuert wird.

An dem Bund 18 des Pumpenkolbens 17 liegt eine Gleitscheibe 26 an, gegen die ein von wenigstens einer Rückholfeder 30 belastetes Joch 27 drückt. Der Einfachheit halber ist nur eine Rückholfeder 30 dargestellt, vorzugsweise sind jedoch zwei oder mehrere Rückholfedern angeordnet. Gleichachsig zur Rückholfeder 30 erstreckt sich ein Führungsstift 31, der einerseits im Gehäuse 10 befestigt und andererseits durch eine Paßbohrung 28 im Joch 27 hindurchgreift, so daß das Joch 27 gegen Verdrehen gesichert ist. Die Rückholfeder 30 stützt sich mit ihrem einen Ende über einen Federteller 32 am Gehäuse 10 und mit dem anderen Ende am Joch 27 ab, wodurch die Hubscheibe 12 gegen die Rollen 14 gedrückt wird. Beim Drehen der Antriebswelle 11 wird der Pumpenkolben 17 in gleicher Weise mitgedreht und zusätzlich hin- und herbewegt, wobei der Pumphub durch die Stirnnocken 13 der Hubscheibe 12

...

entgegen der Wirkung der Rückholfeder 30 und der Saughub durch die gespeicherte Kraft der Rückholfeder 30 bewirkt werden.

Die Rückholfeder nach Figur 2 ist eine tonnenförmig gewundene Schraubendruckfeder 30', deren Windungsdurchmesser sich von beiden Enden zur Mitte hin bei gleichbleibendem Drahtdurchmesser und gleichbleibender Steigung der Windungen vergrößert. Alternativ dazu verkleinert sich der Drahtdurchmesser oder -querschnitt der Schraubendruckfeder 30" nach Figur 3 von den beiden Enden ausgehend zur Mitte hin bei gleichbleibendem mittleren Windungsdurchmesser und gleichbleibender Steigung der Windungen. Beide Ausführungsformen der Schraubendruckfedern 30' und 30" sind geeignet, die durch Resonanzschwingungen insbesondere im Bereich der Federenden überlagerten dynamischen Schubspannungen aufzunehmen, wobei die sich aus der statischen Schubspannung und der dynamischen Schubspannung ergebende Gesamtschubspannung über die gesamte Länge der Feder konstant ist. Dies läßt sich aus der Schubspannungsformel für Schraubendruckfedern ersehen, die lautet

$$\tau = \frac{8 \cdot k \cdot D \cdot \Delta F}{\pi \cdot d^3}$$

wobei bedeuten $\tau$ = Schubspannung, k = Konstante, $\Delta F$ = Kraft, D = mittlerer Windungsdurchmesser, d = Drahtdurchmesser. Aus der angegebenen Gleichung ist zu erkennen, daß die Schubspannung bei sich verkleinerndem Windungsdurchmesser sinkt. Bei der Schraubendruckfeder 30' ist daher der Windungsdurchmesser D1 an den Enden der Feder kleiner als der Windungsdurchmesser D2 in der Mitte, um an den Enden die statische Schubspannung zu verkleinern. Außerdem ist aus der angegebenen Gleichung ersicht-

...

19697

lich, daß bei der Schraubendruckfeder 30", bei der der Drahtdurchmesser d1 an den Enden größer ist als der Drahtdurchmesser d2 in der Mitte, die Spannung mit steigendem Drahtdurchmesser abnimmt. Aus diesem Grunde ist der Drahtdurchmesser an den Enden der Schraubendruckfeder 30" groß gehalten, um bei Auftreten von Resonanzschwingungen in der Feder, wobei die größten Beanspruchungen in den Enden der Federn auftreten, die zulässige Gesamtspannung nicht zu überschreiten.

018C031

R. 19697
17.10.1984 Gl/Pi

ROBERT BOSCH GMBH, 7000 STUTTGART 1

Ansprüche

1. Kraftstoffeinspritzpumpe für Brennkraftmaschinen mit wenigstens einem von einem Nockentrieb jeweils um einen bestimmten Hub bewegten Pumpenkolben und mit wenigstens einer den Pumpenkolben rückführenden und in Anlage mit dem Nockentrieb haltenden sowie sich am Gehäuse abstützenden Schraubenfeder, gekennzeichnet durch eine Schraubendruckfeder (30, 30', 30"), bei der beim Zusammendrüken mit einer bestimmten Kraft in ihren Endbereichen eine kleinere Schubspannung als in ihrem mittleren Bereich auftritt.

2. Kraftstoffeinspritzpumpe nach Anspruch 1, dadurch gekennzeichnet, daß der Windungsdurchmesser (D1, D2) der Schraubendruckfeder (30') von deren Endbereichen zur Mitte hin zunimmt.

3. Kraftstoffeinspritzpumpe nach Anspruch 1, dadurch gekennzeichnet, daß der Durchmesser des Drahtes der Schraubendruckfeder (30") von den Enden zur Mitte hin abnimmt.

FIG.2

FIG.3

FIG.1